# EUROPEAN PATENT SPECIFICATION

(11) **EP 3 811 773 B1**
(45) Date of publication and mention of the grant of the patent: **03.04.2024**
(21) Application number: 19204730.6
(22) Date of filing: 22.10.2019
(51) Int. Cl.: A01G 18/00

(54) **CULTURE MEDIA AND PROCESS FOR IMPROVED ISOLATION AND MAINTENANCE OF TERFEZIA SPP. MYCELIUM CULTURES**
KULTURMEDIEN UND VERFAHREN ZUR VERBESSERTEN ISOLIERUNG UND WARTUNG VON TERFEZIA SPP. MYCELIUM-KULTUREN
MILIEUX DE CULTURE ET PROCÉDÉ POUR UNE ISOLATION ET UNE MAINTENANCE AMÉLIORÉES DE TERFEZIA SPP. CULTURES DE MYCELIUM

(43) Date of publication of application: 28.04.2021
(73) Proprietor: Universidade de Évora, 7000-803 Évora (PT)
(72) Inventor: Silva, Celeste, 7005-552 ÉVORA (PT); Louro, Rogério, 2910-827 SETÚBAL (PT)
(74) Representative: Pereira da Cruz, Joao

(56) References cited:
- ES-A1- 2 088 363
- ARENAS FRANCISCO ET AL: "Mycelium ofTerfezia claveryias inoculum source to produce desert truffle mycorrhizal plants", MYCORRHIZA, SPRINGER INTERNATIONAL, BERLIN, DE, vol. 28, no. 7, 20 September 2018 (2018-09-20), pages 691-701, XP036612279, ISSN: 0940-6360, DOI: 10.1007/S00572-018-0867-3 [retrieved on 2018-09-20]
- Maria Asunción Morte ET AL: "In vitro mycorrhization of micropropagated Helianthemum almeriense plantlets with Terfezia claveryi (desert truffle)", Agricultural and Food Science, 1 May 1994 (1994-05-01), pages 309-314, XP55665474, DOI: 10.23986/afsci.72700 Retrieved from the Internet: URL:https://journal.fi/afs/article/view/72 700
- SANDRA FONSECA ET AL: "Fungal Production and Manipulation of Plant Hormones", CURRENT MEDICINAL CHEMISTRY, vol. 25, no. 2, 22 January 2018 (2018-01-22), XP55666115, NL ISSN: 0929-8673, DOI: 10.2174/0929867324666170314150827
- EMILIE CHANCLUD1 AND JEAN-BENOIT MOREL: "Plant hormones: a fungal point of view", MOLECULAR PLANT PATHOLOGY, vol. 17, no. 8, 1 January 2016 (2016-01-01), pages 1289-1297,

## Description

### Technical domain

The present invention relates to a culture media and to a process for improving isolation and maintenance of mycelium cultures of "desert truffles" included within the genus *Terfezia,* the most species rich of all of desert truffle genera.

Cultivation of these ectomycorrhizal *Ascomycota* implies the co-culture of both fungal symbiont and plant host in sterile or semi-sterile conditions. However, isolation and maintenance of *Terfezia* spp. pure cultures can be challenging. Moreover, many strains are unable to be sub-cultured, and so far, the few successful attempts, mainly with *Terfezia* spp. from alkaline soils, were found to grow much too slowly to produce adequate amounts of mycelial inoculum in conventional culture media and conditions.

The culture media and process of the present invention improve the isolation rates and enhances *Terfezia* spp. hyphal proliferation in a reliable and reproducible way.

Therefore, the present invention lays in the technical domain of biochemistry and microbiology, in particular to a process and composition to produce desert truffle's mycelium that can be used in several industries such as pharmaceutical, cosmetic, food and agriculture.

### Background of the invention

The term truffle usually designates the fruiting body (ascocarp) of a subterranean *Ascomycota* fungus. These underground fruitbodies are produced by ectomycorrhizal fungi that live in close association with the roots of diverse plant species. In addition to the much-valued forest truffles species, included in the genus *Tuber,* numerous others trufflebearing species found in arid and semi-arid areas throughout the world, these are commonly referred as desert truffles.

Many of these desert truffle fungi are of considerable interest for ecological, agroforestry and commercial purposes. Although not as flavoured as forest truffles, their ascocarps are nevertheless highly prized as food, for their unique musky flavour and high content of proteins, and as medicine, due to their anti-bacterial properties against a wide range of bacteria. Among desert truffles, the most highly valuable and frequently collected species, belong to the genus *Terfezia.*

Like most mycorrhizal fungi, desert truffles lack the ability to survive in the soil without a plant host. They depend solely on photosynthates, such as sugars, supplied by their plant hosts, and in exchange provide water and valuable nutrients, such as phosphorus, which may not be readily available in an assimilable form to the plant, thus, aiding in its establishment and survival in harsh environments. In such associations, the majority of nutrient exchange occurs in an interface, designated as mycorrhiza, comprised of intercellular and/or extracellular hyphal network and the plant root cells.

Truffle cultivation began as early 1790, when Pierre Mauléon noticed an "obvious symbiosis" between oak trees and truffles. Mauléon then began to cultivate truffles, by taking acorns from trees known to have produced truffles and sowing them in chalky soil. Later, in 1808, Joseph Talon had the idea of transplanting some seedlings that he had collected at the base of oak trees known to host truffles in their root system, a system that is known in French as *"trufficulture".* Since then, several volumes, have sought to summarize the current knowledge concerning truffles or provide an overview on truffle cultivation.

However, not a single one of these works deals specifically with desert truffles. In fact, the earliest reports on the successful attempts at desert truffle cultivation date back some 20 years, and only recently desert truffle cultivation began blooming. For example, the first plantation of *Terfezia* mycorrhized seedlings was established in 1999 in Murcia, but so far, only two *Terfezia* species, *T. claveryi* in Spain and *T. boudieri* in Tunisia, were successfully cultivated, both with perennial and annual *Helianthemum* species in basic soils.

Desert truffles cultivation is not easy to achieve. It depends on the successful co-culture of both fungal symbiont and plant host in sterile or semi-sterile conditions, and for decades it was hampered by difficulties in obtaining good inoculum sources.

The first in vitro germination of *Terfezia* ascospores have been described in the nineteen seventies. Since then, various formulations were tested. For instance, Awameh & Alsheikh (1979a, 1979b, 1980a, 1980b) used the KISR medium, developed at the Kuwait Institute for Scientific Research, for the isolation, conservation and multiplication of different *Terfezia.* Later, Ravolanirina (1986) used the Mma medium developed by Hewitt (1966), to successfully cultivate both *Tirmania* and *Terfezia* species. Soon after, Fortas & Chevalier (1992) studied the ability of *Terfezia arenaria* spores to germinate in different media, namely, KISR, Mma, Ma (Cristomalt 1%) and INRA-Morizet medium (Payan 1982).

Other formulations were tested, specifically, the Fontana medium (Bonfante & Fontana 1973) and MMN medium (Marx 1969), both of which were believed to facilitate hyphal proliferation. However, isolation of *Terfezia* spp. continued to be challenging and the mycelium growth rates slow and extremely variable between species. Furthermore, most isolated strains were unable to grow after sub-culturing.

Document WO2014020215A1 describes a method for production of *Ascomycota* mycelial inoculum, in particular of *Terfezia* spp., comprising several steps, including the isolation of the mycelium and its inoculation in a modified oat solid culture medium (MOM), purification and subsequent growth in a modified Biotin-Aneurin-Folic Acid (BAF) liquid culture medium, in order to finally obtain the purified fungal mycelium.

Document WO2018114751A1 describes a method for induction and production of truffle *peridia,* comprising the step of inducing the formation of *peridia* and of multiplying the *peridia* in a nutritive medium, after having isolated the mycelium by an extraction process, being the said nutritive medium based on malt and/or yeast extract.

Non-synthetic culture media by definition include some sort of natural ingredients of variable chemical composition which may differ from batch to batch. On the other hand, synthetic media have a known chemical composition, so the same medium can be duplicated with a high degree of accuracy.

Therefore, there is a need to develop a reliable and reproducible culture media that allows improved isolation and growth of *Terfezia* spp. mycelium on agar plates and thus the production of the related product in a large scale for mass production of inoculated seedlings.

For this purpose, the present invention relates to a new fully synthetic culture medium (LS) that is advantageous for both isolation and supporting hyphal growth of these *Ascomycota* fungi which live as obligate symbionts of many *Cistaceae* plants.

### Description of the figures

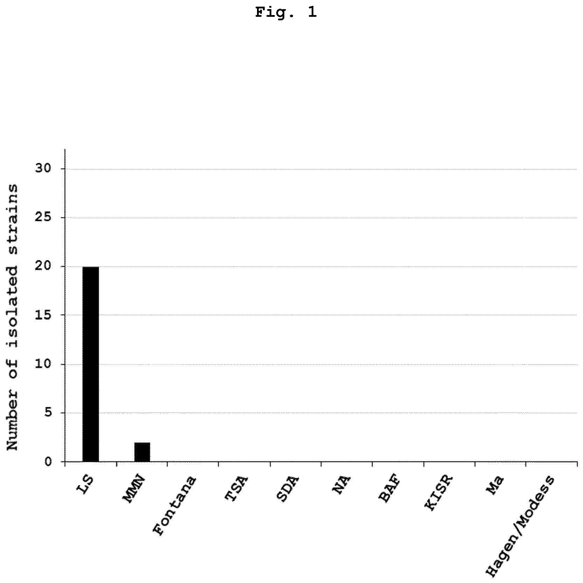

**Fig. 1** is a diagram showing the number of isolated *Terfezia* specimens per culture media tested, wherein it is possible to see that LS medium led to a successful isolation of 20 *Terfezia* strains from a total of 32, which represents a success rate of near 60%. Regarding the conventional media tested, only MMN medium was effective for the isolation of the tested *Terfezia* strains, but with a considerably lower, only 6%, success rate.

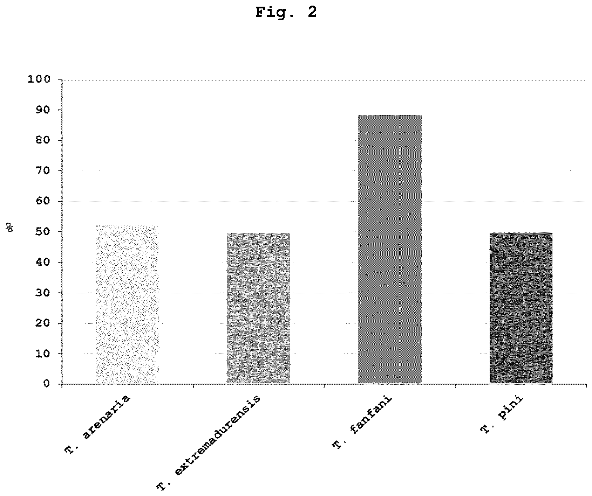

**Fig. 2** is a diagram showing the percentages of isolated strains using the new LS medium per *Terfezia* species, wherein it possible to see that all four *Terfezia* species were able to form colonies in LS medium, whilst only *T. fanfani* and *T. arenaria* were isolated on MMN medium, the first with an isolation percentage of 10% and the second of 6%.

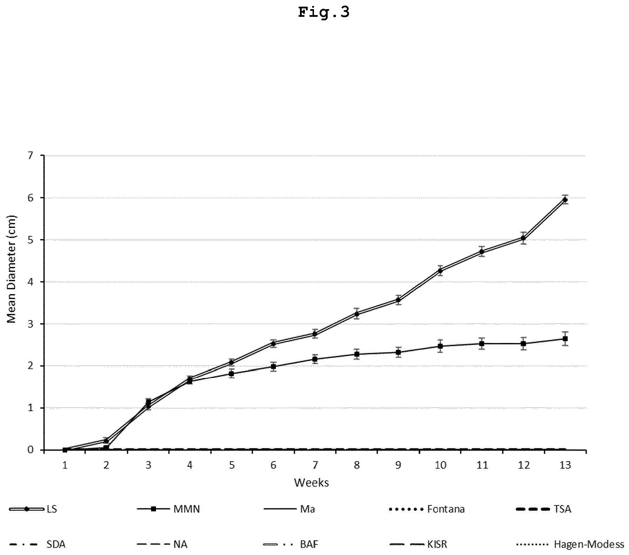

**Fig. 3** shows mycelial growth (cm) for *T. arenaria* (strain Ta195) over a period of 13 weeks on 10 different culture media, wherein it is possible to see that mycelia grew more vigorously in the LS media than in MMN, reaching a mean colony diameter at week 7 of 2.76 cm and a maximum mean colony diameter at week 13 of 5.96 cm in the LS medium.

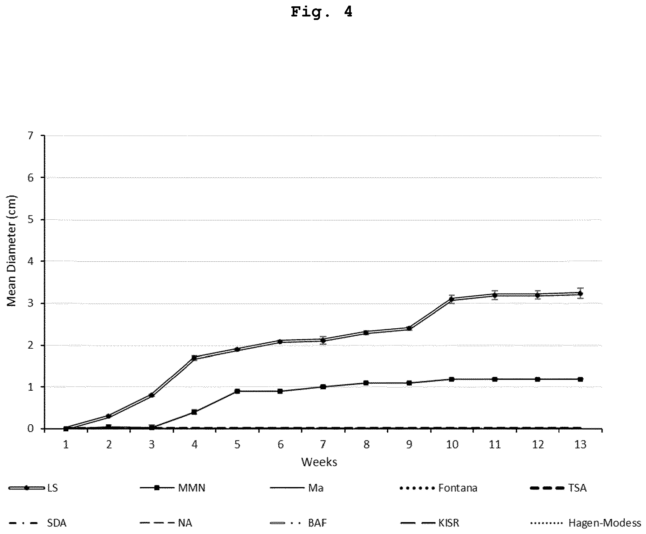

**Fig. 4** shows mycelial growth (cm) for *T. fanfani* (strain Tf235) over a period of 13 weeks on 10 different culture media, wherein it is possible to see that mycelia grew more vigorously in the LS media than in MMN, achieving a mean colony diameter at week 7 of 2.40 cm and a maximum mean colony diameter at week 13 of 3.24 cm in the LS medium.

### Description of the invention

The present invention relates to a culture media for the maintenance and isolation of *Terfezia* spp. and to a process for isolation and maintenance of *Terfezia* spp. mycelium cultures.

### 1. LS culture medium

A fully synthetic culture media is herein described as medium LS. Given the obligate nature of the symbiotic relationship of desert truffles and their plant hosts, the basic nutrient requirements of cultured plant cells and/or tissues should be similar for cultured ectomycorrhizal fungi. Yet, it is likely that these plant tissue culture media are not optimal for improved grow of the fungal symbiont by itself. Hence, the LS culture medium encompasses an intermediate composition between the conventional culture media generally used to grow *Terfezia* spp. putative plant hosts, and the media typically to isolate desert truffles.

Most commonly used culture media are generally composed by macronutrients, micronutrients, vitamins, amino acids or other nitrogen supplements, sugar(s), other undefined organic supplements and solidifying agents. Thus, in order to simplify comparisons between LS and other culture media, the LS medium composition henceforth described is divided into the following components: carbon sources, macronutrients, iron chelates, micronutrients, vitamins, phytohormones and others.

Desert truffles can assimilate diverse carbon sources, even highly polymerized sugars, such as, starch and pectin. However, *Terfezia* strains are more specific regarding the utilization of some sugars as carbon source, for instance, they do not assimilate certain sugars, i.e. arabinose, xylose, fructose and galactose. In fact, some of these sugars, like galactose, are considered as growth inhibitors for certain *Terfezia* species. Hence, the two best suited carbon sources for *Terfezia* are glucose and sucrose, though sucrose has been proven to perform better than glucose.

Thus, in an embodiment of the invention, the LS culture media comprises sucrose and/or glucose as carbon source.

New insights on carbohydrate allocation at the plant-fungus interface of ECM fungi shows that hexoses, such as glucose, are delivered by the host plant, originating from sucrose secretion followed by invertase-dependent hydrolysis at the common apoplast of the plant-fungus interface.

However, while most *Basidiomycota* ECM fungi lack the invertase activity which implies that they are dependent on the enzyme activity (sucrose hydrolysis) of the plant partner, in contrast, the *Ascomycota* ECM fungi do have invertase genes, indicating that these fungi may obtain the majority of their carbon as sucrose.

Alternatively, sucrose can also play an essential role in signalling pathways which might promote spore germination or hyphae growth in some *Ascomycota* ECM fungi. Indeed, the key role of sugars as signalling molecules is well illustrated by the variety of sugar sensing and signalling mechanisms discovered in free-living microorganisms such as fungi.

Given the above, the use of sucrose as the only carbon source is highly recommended for preparation the LS culture medium, within the range of 5 to 15 (g/L), preferably 7.5 to 15 (g/L), even more preferably of 10 (g/L).

Thus, in another embodiment of the invention, the LS culture media comprises only sucrose as carbon source.

Concerning macronutrients, it is known that phosphorous, calcium and magnesium are particularly important to support the growth of *Terfezia* mycelium. Also, *Terfezia* spp. shows a clear preference for nitrate salts, but in the absence of these salts they can use phosphates and sulphates salts, as substituents.

Therefore, in another embodiment of the invention, the LS medium comprises as macronutrients KNO₃ at a concentration of 0.40 and 0.55 (g/L), preferably of 0.475 (g/L); NH₄NO₃ at a concentration of 0.35 and 0.48 (g/L), preferably of 0.413 (g/L); CaCl₂.2H₂O at a concentration of 0.093 and 0.13 (g/L), preferably of 0.11 (g/L); MgSO₄.7H₂O at a concentration of 0.093 and 0.106 (g/L), preferably of 0.079 (g/L); and KH₂PO₄ at a concentration of 0.036 and 0.049 (g/L), preferably of 0.043 (g/L).

Iron chelates and micronutrients are trace elements required by many fungi to initiate germination and sustained growth, but only in small amounts. For example, iron deficiency may result in stunted growth, and in excess can be extremely toxic.

In consequence, a good adjustment of these trace elements is of paramount importance. Regarding the iron chelates, the LS medium comprises: Na₂EDTA in the range of 0.0079 to 0.0107 (g/L), preferably of 0.0093 (g/L) and FeSO₄.7H₂O in the range of 0.0059 to 0.0080 (g/L), preferably of 0.0070 (g/L).

Other micronutrients, such as zinc, copper, and molybdenum are also important to activate some enzymes such as e.g. catalase and superoxide dismutase (SOD), which depend on the presence of transition metals to be able to perform their redox functions, and aid the fungal species to avoid damage by reactive oxygen species (ROS).

Like the iron chelates, these micronutrients are often toxic in excess, hence they are present in the LS medium in very small amounts, namely, MnSO₄.4H₂O at a concentration of 0.0036 and 0.0049 (g/L), preferably of 0.0042 (g/L); ZnSO₄.7H₂O at a concentration of 0.0018 and 0.0025 (g/L), preferably of 0.0022 (g/L); CuSO₄.5H₂O at a concentration of 5.1×10⁻⁶ and 6.9×10⁻⁶ (g/L), preferably of 6.0×10⁻⁶ (g/L); CoCl₂.6H₂O at a concentration of 5.1×10⁻⁶ and 6.9×10⁻⁶ (g/L), preferably of 6.0×10⁻⁶ (g/L); Na₂MoO₄.2H₂O at a concentration of 5.1×10⁻⁶ and 6.9×10⁻⁶ (g/L), preferably of 6.0×10⁻⁶ (g/L); H₃BO₃ at a concentration of 0.0013 and 0.0018 (g/L), preferably of 0.0016 (g/L), and KI at a concentration of 0.00018 and 0.00024 (g/L), preferably of 0.0016 (g/L).

Usually, only water-soluble vitamins (e.g. vitamin B₁ or thiamine, B₂ or riboflavin, B₆ or pyridoxine and vitamin H or biotin) are required by fungi. Yet, some fungi lack the biosynthetic capacity to produce vitamins, partially or completely, and thus present a limited growth in the absence of vitamins.

The LS medium encompasses a selected pool of vitamins and growth factors that act as coenzymes or as constituents of coenzymes, specifically: thiamine hydrochloride at a concentration of 2.1×10⁻⁵ and 2.9×10⁻⁵ (g/L), preferably of 2.5×10⁻⁵ (g/L), nicotinic acid at a concentration of 0.00011 and 0.00014 (g/L), preferably of 0.00013 (g/L), pyridoxine hydrochloride at a concentration of 0.00011 and 0.00014 (g/L), preferably of 0.00013 (g/L), myo-Inositol at a concentration of 0.021 and 0.029 (g/L), preferably of 0.025 (g/L) and glycine at a concentration of 0.00043 and 0.00058 (g/L), preferably of 0.00050 (g/L).

The LS medium also comprises a combination of cytokinin and auxin hormones. Several mycorrhizal fungi produce compounds that are similar to plant hormones, such as auxins, cytokinins (CKs), gibberellic acids (GAs), ethylene (ET), abscisic acid (ABA), jasmonic acid (JA) and salicylic acid (SA). The biosynthesis of such hormones is normally associated with plant host root modifications often required in these symbiotic interactions. Additionally, it has also been suggested that plant hormones, such as auxins and cytokinins, play a role in several physiological processes, for e.g. to break spore dormancy and promote spore germination, enhance hyphal development and nutrient uptake in fungi themselves.

Therefore, in the scope of the present invention adequate cytokinins are adenine-type cytokinins represented by kinetin, zeatin, and 6-benzylaminopurine (BAP), preferably BAP.

Concerning auxins, indole-3-acetic acid (IAA), indole-3-butyric acid (IBA) and α-Naphthalene acetic acid (α-NAA) can be used in the preparation of the LS medium, preferably Indole-3-acetic acid (IAA).

The effect of phytohormones on fungal physiology are greatly concentration-dependent and can differ strongly from one species to another. So, for the preparation of the LS medium, it is highly advisable that BAP and IAA do not exceed the proposed concentrations.

Hence, in a preferred embodiment, the LS medium comprises a combination of 6-benzylaminopurine (BAP) in the range of 0.0004 to 0.0006 (g/L), preferably of 0.0005 (g/L), and indole-3-acetic acid (IAA) in the range of 0.0004 to 0.0006 (g/L), preferably of 0.0005 (g/L).

Finally, the LS medium can be solidified with a gelling agent, such as agar present in a concentration in the range of 7 to 15 (g/L), preferably 8.5 to 11.5 (g/L), even more preferably 10 (g/L).

### 2. Process for isolating Terfezia spp. mycelium using LS medium

The process for isolation of *Terfezia* spp. comprises an initial step, whereby, a scalpel blade is used to cut the ascocarps and to expose the interior (glebal tissue) and a final step, by which a small (≈2 mm³) piece from the central gleba, that contains a mixture of hyphae and spores, is plated (inoculation by direct transfer) onto a petri dishes (90 mm Ø) containing fresh LS medium.

Afterwards, the glebal tissue may give rise to a colony which than can be periodically transferred (subcultured) onto new Petri dishes containing the same agar medium.

If the mycelium maintains its morphological characteristics during the subculturing process, the isolation is successful, and a pure culture of that fungal species is stabilized. These stabilized mycelial pure cultures are hereafter designated isolates.

### 3. Process for maintaining Terfezia spp. mycelium isolates using LS medium

As soon as the mycelium pure cultures are stabilized, it becomes necessary to maintain their viability and purity by keeping the pure cultures free from contaminations. For maintaining *Terfezia* spp. mycelium isolates, pure cultures are transferred periodically onto fresh LS medium (subculturing) to allow the continuous growth and viability of the isolates. Inoculation of new LS medium plates should be made under a laminar air-flow cabinet, by direct transfer of 4-week-old mycelial discs cut from colonies of a selected *Terfezia* spp. stabilized pure cultures. Petri dishes are then incubated in the dark at 25 ± 2 °C for 90 days. The subculturing process has to be repeated periodically every three months, in order to maintain the viability of the isolates.

### Examples

### Example 1. Preparation of LS culture media

LS culture media was prepared by mixing each compound in 1 L of water or by adding predefined volumes of previously prepared stock solutions with known concentrations.

However, direct weighing of some media components (e.g., micronutrients and vitamins) that are required only in milligram or microgram quantities in the final formulation may not be performed with sufficient accuracy, so, previous preparation of concentrated stock solutions and subsequent dilution into the final media is preferable to mixing each compound individually in 1 L of water.

Accordingly, 1 litre of LS culture media was prepared by the following process:
1) **The macronutrient stock solution [10x] concentrated** was prepared by weighing 19 g of **KNO₃;** 4.4 g of **CaCl₂.2H₂O;** 3.7 g of **MgSO₄.7H₂O;** 1.7 g of **KH₂PO₄** and 16.5 g of **NH₄NO₃.** Each component was then dissolved separately in a small amount of distilled water and added separately to an Erlenmeyer flask, while agitating without heating. Next, distilled water was continuously added to the Erlenmeyer flask, until the final volume of 1 Litre was reached. The macronutrient stock solution [10x] concentrated was then placed in an amber glass bottle to prevent photodecomposition and stored at 4 °C until further use.
2) **The iron chelates stock solution [100x] concentrated** was prepared by weighing 3.725 g of **Na₂EDTA.2H₂O** and 2.785 g of **FeSO₄.7H₂O.** Both components were then dissolved separately in a small amount of distilled water and added separately to an Erlenmeyer flask, while agitating without heating. Next, distilled water was continuously added to the Erlenmeyer flask, until the final volume of 1 Litre was reached. The iron chelates stock solution [100x] concentrated was then placed in an amber glass bottle to prevent photodecomposition and stored at 4 °C until further use.
3) **The micronutrient stock solution [100x] concentrated** was prepared by weighing 1.69 g of **MnSO₄.4H₂O;** 0.86 g of **ZnSO₄.7H₂O;** 0.0025 g of **CuSO₄.5H₂O;** 0.0025 g of **CoCl₂.6H₂O;** 0.025 g of **Na₂MoO₄.2H₂O;** 0.62 g of **H₃BO₃** and 0.083 g of **KI.** Each component was then dissolved separately in a small amount of distilled water and added separately to an Erlenmeyer flask, while agitating without heating. Next, distilled water was continuously added to the Erlenmeyer flask, until the final volume of 1 Litre was reached. The micronutrient stock solution [10x] concentrated was then placed in an amber glass bottle to prevent photodecomposition and stored at 4 °C until further use.
4) **The vitamins stock solution [100x] concentrated** was prepared by weighing 0.01 g of **thiamine hydrochloride;** 0.05 g of **nicotinic acid;** 0.05 g of **pyridoxine hydrochloride;** 10 g of **myo-Inositol** and 0.2 g of **glycine.** Each component was then dissolved separately in a small amount of distilled water and added separately to an Erlenmeyer flask, while agitating without heating. Next, distilled water was continuously added to the Erlenmeyer flask, until the final volume of 1 Litre was reached. The vitamins stock solution [100x] concentrated was then divided in four 250 mL amber glass bottles and stored at 4 °C until further use.
5) **The Cytokinin stock solution [1x] concentrated** was prepared by weighing 1 g of **6-benzylaminopurine (BAP)** and dissolving it in 1 litre of distilled water. The BAP stock solution [1x] concentrated was then divided in 500 (2 mL) Eppendorf safe-lock tubes and stored at 4 °C until further use.
6) **The auxin stock solution [1x] concentrated** was prepared by weighing 1 g of **indole-3-acetic acid (IAA)** and dissolving it in 1 litre of distilled water. The IAA stock solution [1x] concentrated was then divided in 500 (2 mL) Eppendorf safe-lock tubes and stored at 4 °C until further use.
7) After preparation of all stock solutions, 25 ml of the **macronutrient stock solution [10x]** was added to a measuring cup on a stirring plate. Next, 2.5 ml of the **iron chelates stock solution [100x]** was also added to the same measuring cup on the stirring plate. Then, 2.5 ml of the **micronutrient stock solution [100x]** was also transferred to the same measuring cup. Next, 2.5 ml of the **vitamins stock solution [100x]** was also added to the same measuring cup on the stirring plate. Afterward, 500 µL of the **cytokinin stock solution [1x]** and 500 µL of the **auxin stock solution [1x]** were also added to the same measuring cup with the aid of a micropipette. Next, 10 g of sucrose and 10 g of agar were weighted and placed into the same measuring cup. To make up the final volume of 1 litre, 966.5 ml of distilled water was measured using a graduated beaker and poured into the stirring mixture. Since the initial pH value of the stirring mixture was lower than 5.5 some drops of KOH (0.1 M) solutions were used to adjust the pH to the desired value (pH = 5.5).

Finally, the content of the measuring cup was poured into a 2 L Erlenmeyer flask, closed with aluminium foil. The LS culture media was then sterilized in an autoclave at 121 °C for 15 minutes. After cooling, to near 22 °C, the LS medium was distributed into Petri dishes (90 mm Ø; 25 mL each), under a laminar air-flow cabinet.

**Table 1. Composition of LS culture medium**

| Class | Component | Quantity (g/L) |
|---|---|---|
| Carbon source | Sucrose | 10 |
| Macronutrients | KNO₃ | 0.475 |
| | CaCl₂.2H₂O | 0.11 |
| | MgSO₄.7H₂O | 0.0925 |
| | KH₂PO₄ | 0.0425 |
| | NH₄NO₃ | 0.4125 |
| Iron Chelates | Na₂EDTA | 0.00931 |
| | FeSO₄.7H₂O | 0.00696 |
| Micronutrients | MnSO₄.4H₂O | 0.004225 |
| | ZnSO₄.7H₂O | 0.00215 |
| | CuSO₄.5H₂O | 0.000006 |
| | CoCl₂.6H₂O | 0.000006 |
| | Na₂MoO₄.2H₂O | 0.00006 |
| | H₃BO₃ | 0.00155 |
| | KI | 0.00021 |
| Vitamins | Thiamine hydrochloride | 0.000025 |
| | Nicotinic acid | 0.000125 |
| | Pyridoxine Hydrochloride | 0.000125 |
| | myo-Inositol | 0.025 |
| | Glycine | 0.0005 |
| Phytohormones | 6-Benzylaminopurine (BAP) | 0.0005 |
| | Indole-3-acetic acid (IAA) | 0.0005 |
| Others | Agar | 10 |
| | pH | 5.5 |

### Example 2. Effect of LS culture medium vs. conventional culture media on Terfezia spp. isolation

Fresh *Terfezia* ascocarps were harvested from different locations in the Centre and Southern Portugal, between February 2007 and April 2007 and brought to the laboratory. Upon arrival, all fresh ascocarps were washed in tap water, brushed free of adhering soil particles and cleaned superficially with ethanol (70%). Afterward, each ascocarp was sorted by species and maturity stage and the best-preserved specimens of each collection were selected for isolation. In total, 8 specimens of each species (*T*. *arenaria, T. fanfani, T. extremadurensis,* and *T. pini*) were used in the experiment.

In a laminar air-flow cabinet, these ascocarps were then carefully broken, opened and small pieces (1-2 mm across) of glebal tissue (containing both hyphae and spores) were aseptically excised from the inner part of the fruit bodies with a scalpel and plated (inoculated by direct transfer) onto Petri dishes (90 mm Ø) containing the LS medium or one of the semi-synthetic and synthetic conventional media listed in **Table 2.**

All media pH was adjusted to pH = 5.5 and three replicate plates from each treatment (medium) were inoculated, totalling 30 petri dishes per specimen. The Petri dishes were then labelled, sealed with parafilm and placed on an incubation chamber, in the dark at 25 ± 2 °C for 90 days. As for the remaining fragments of each specimen, half were frozen at -20 °C for further DNA characterization and the remaining half were dried at 40 °C and stored in sealed plastic bags, labelled with collection details and deposited at the Évora University Herbarium (UEVH-FUNGI), Portugal.

**Table 2. Conventional culture media for isolation and cultivation of T. arenaria**

| Type of media | | Composition per litre |
|---|---|---|
| Semi-synthetic | Hagen/Modess | Glucose 5 g, malt extract 5 g, KH₂PO₄ 0.5 g, NH₄Cl 0.5 g, MgSO₄.7H₂O 0.5 g, FeCl₃ (1%) 0.5 mL, Thiamine 50 g and agar 15 g |
| | Malt agar (1%) (MA) | Malt extract 10 g, agar 15 g |
| | K.I.S.R. | Malt extract 10 g, Peptone 6.5 g, KNO₃ 0.13 g, Ca(NO₃) 0.55 g, Agar 15 g |
| | Biotin-aneurin-folic acid agar (BAF) | Glucose 30 g, yeast extract 0.2 g, peptone 2 g, CaCl₂.2H₂O 0.1 g, NaCl 0.025 g, KH₂PO₄ 0.5 g, MgSO₄.7H₂O 0.5 g, FeCl₃.7H₂O 10 mg; MnSO₄ 5 mg, ZnSO₄.7H₂O 1 mg, thiamine 0.05 mg; folic acid 0.1 mg; inositol 50 mg; biotin 0.001 mg; agar 15 g |
| | Nutrient agar (NA) | Meat extract 1 g, yeast extract 2 g, peptone 5 g, NaCl 5 g, agar 15 g |
| | Sabouraud Dex agar (SDA) | Glucose 40 g, Peptone from casein 5 g, Peptone from Meat 5 g, Histidin 1 g, Lecithine 0.70 g, Polysorbate 80 5 g, Na₂S₂O₃ 0.5 g, Agar 15 g |
| | Tryptic Soy Agar (TSA) | Peptone from casein 15 g, Soya Peptone 5 g, NaCl 5 g, agar 15 g |
| | Fontana | Glucose 6.67 g, Peptone 1.67 g, Casein hydrolysate 0.33 g, KH₂PO₄ 0.33 g, CaCl₂ (1%) 1.67 ml, MgSO₄ (1%) 0.167 ml, MnSO₄ (1%) 0.167 ml, ZnSO₄ (1%) 0.167 ml, FeCl₃ (1%) 0.167 ml, Thiamine 0.033 g, Agar 15 g |
| Synthetic | Modified Melin-Norkrans (MMN) | Glucose 10 g, CaCl₂ 0.05 g, NaCl 0.025 g, NH₄.2HPO₄ 0.25 g, KH₂PO₄ 0.5 g, MgSO₄.7H₂0 0.15 g, FeCl₃ 0.012 g, Thiamine 0.0001 g, agar 15 g |

After inoculation, all plates were checked weekly and, when needed, transferred onto new Petri dishes containing the same agar medium (subculture), until the end of the trial (90 days after).

The isolation success rate of each medium was then calculated as the number of strains successfully isolated divided by the total number of strains.

The data summarized in **Fig. 1** show that the LS medium led to the successful isolation of 20 *Terfezia* strains from a total of 32, which represents a success rate of near 60%. Regarding the conventional media tested, only MMN medium was effective for the isolation of the tested *Terfezia* strains, but with a considerably lower, only 6%, success rate.

Furthermore, while all four *Terfezia* species were able to form colonies in LS medium **(****Fig. 2****),** only *T. fanfani* and *T. arenaria* were isolated on MMN medium, the first with an isolation percentage of 10% and the second of 6%.

### Example 4. Effect of LS culture medium vs. conventional culture medium on growth and maintenance of Terfezia spp. mycelium

Mycelial growth of two *Terfezia* isolates were evaluated on 10 different culture media (LS medium or one of the media listed in **Table 2;** all with pH = 5.5).

For the trial, two *Terfezia* strains were randomly selected from a pool of *Terfezia* isolates: *T. arenaria* strain Ta195 (UEVH-FUNGI 2003875) and *T. fanfani* strain Tf235 (UEVH-FUNGI 2004080), both 4-week-old. The above cited strains were successfully isolated, following the process described in the **example 3,** on LS medium prepared as described in **example 1,** prior to this assay.

The subsequent process was repeated for each *Terfezia* strain: under a laminar air-flow cabinet, one mycelial disc (5 mm Ø) was cut and removed from the edge of a colony of Ta195 isolate, and transferred into the centre of a Petri dish (90 mm Ø) containing one of the tested media. The process was repeated 10 times for each culture media, totalling 100 petri dishes per *Terfezia* isolate. All Petri dishes were then labelled, sealed with parafilm and placed on an incubation chamber, in the dark at 25 ± 2 °C.

*Terfezia* mycelial growth was measured weekly as the average of the two perpendicular diameters of the colony. Measurements were made at the bottom of each Petri dish to avoid visual distortion.

Results show that only the LS and MMN media were able to support any mycelial growth of *T. arenaria* and *T. fanfani.* Furthermore, significant statistical differences were found between mean colony diameters for both *T. arenaria* and *T. fanfani,* growing in LS and MMN media. As for the *T. arenaria* strain, mycelia grew more vigorously in the LS media than in MMN, reaching a mean colony diameter at week 7 of 2.76 cm and a maximum mean colony diameter at week 13 of 5.96 cm in the LS medium **(****fig. 3****)**.

The same pattern was observed for *T. fanfani* **(****fig. 4****)** which achieved a mean colony diameter at week 7 of 2.40 cm and a maximum mean colony diameter at week 13 of 3.24 cm in the LS medium.

Navarro-Ródenas and collegues (2011) using MMN medium have obtained a maximum colony diameter of 1.32 cm for *T. claveryi* at week 7. Hence, our results clearly show that the new LS medium represents an improvement in relation to the standard MMN medium, the only fully synthetic media, thus far, known to support the growth of *Terfezia* spp. mycelia.

## Claims

1. A synthetic culture media (LS) for the isolation and maintenance of *Terfezia* spp. comprising:
- **sucrose and/or glucose** as carbon source at a concentration in the range of 5 to 15 (g/L), preferably of 7.5 to 15 (g/L), even more preferably of 10 (g/L),
the following macronutrients:
- KNO₃ at a concentration of 0.40 and 0.55 (g/L), preferably of 0.475 (g/L),
- NH₄NO₃ at a concentration of 0.35 and 0.48 (g/L), preferably of 0.413 (g/L),
- CaCl₂.2H₂O at a concentration of 0.093 and 0.13 (g/L), preferably of 0.11 (g/L),
- MgSO₄.7H₂O at a concentration of 0.093 and 0.106 (g/L), preferably of 0.079 (g/L),
- KH₂PO₄ at a concentration of 0.036 and 0.049 (g/L), preferably of 0.043 (g/L),
**the following micronutrients:**
- iron chelates Na₂EDTA at a concentration in the range of 0.0079 to 0.0107 (g/L), preferably of 0.0093 (g/L), and FeSO₄.7H₂O in the range of 0.0059 to 0.0080 (g/L), preferably of 0.0070 (g/L);
- MnSO₄.4H₂O at a concentration of 0.0036 and 0.0049 (g/L), preferably of 0.0042 (g/L);
- ZnSO₄.7H₂O at a concentration of 0.0018 and 0.0025 (g/L), preferably of 0.0022 (g/L);
- CuSO₄.5H₂O at a concentration of 5.1×10⁻⁶ and 6.9×10⁻⁶ (g/L), preferably of 6.0×10⁻⁶ (g/L);
- CoCl₂.6H₂O at a concentration of 5.1×10⁻⁶ and 6.9×10⁻⁶ (g/L), preferably of 6.0×10⁻⁶ (g/L);
- Na₂MoO₄.2H₂O at a concentration of 5.1×10⁻⁶ and 6.9×10⁻⁶ (g/L), preferably of 6.0×10⁻⁶ (g/L);
- H₃BO₃ at a concentration of 0.0013 and 0.0018 (g/L), preferably of 0.0016 (g/L), and
- KI at a concentration of 0.00018 and 0.00024 (g/L), preferably of 0.0016 (g/L),
**the following vitamins and growth factors:**
- thiamine hydrochloride at a concentration of 2.1×10⁻⁵ and 2.9×10⁻⁵ (g/L), preferably of 2.5×10⁻⁵ (g/L),
- nicotinic acid at a concentration of 0.00011 and 0.00014 (g/L), preferably of 0.00013 (g/L),
- pyridoxine hydrochloride at a concentration of 0.00011 and 0.00014 (g/L), preferably of 0.00013 (g/L),
- myo-Inositol at a concentration of 0.021 and 0.029 (g/L), preferably of 0.025 (g/L), and
- glycine at a concentration of 0.00043 and 0.00058 (g/L), preferably of 0.00050 (g/L),
**and the following phytohormones:**
- a cytokinin of the adenine-type the 6-benzylaminopurine (BAP) at a concentration in the range of 0.0004 to 0.0006 (g/L), preferably of 0.0005 (g/L), and
- an auxin indole-3-acetic acid (IAA), in a concentration in the range of 0.0004 to 0.0006 (g/L), preferably of 0.0005 (g/L).

2. A **synthetic culture media (LS)** for the isolation and maintenance of *Terfezia* spp. according to claim 1 wherein the carbon source is sucrose.

3. A **synthetic culture media (LS)** for the isolation and maintenance of *Terfezia* spp. according to any of the claims 1 to 2 further comprising a gelling agent, preferably agar at a concentration of 7 to 15 (g/L), preferably of 8.5 to 11.5 (g/L), more preferably of 10 (g/L).

4. A **process of isolating *Terfezia* spp. mycelium** comprising placing a part of the central gleba tissue of an ascocarp of *Terfezia* spp. onto a cultivation recipient containing LS culture medium, as described in any of the claims 1 to 3.

5. A **process of maintaining *Terfezia* spp. mycelium isolates** comprising the following steps:
a) direct transference of 4-week-old mycelial discs cut from colonies of selected *Terfezia* spp. stabilized pure cultures onto LS medium, as described in any of the claims 1 to 3,
b) incubation of the cultures of (a) in the dark at 25 ± 2°C for approximately 90 days,
c) repeating the steps (a) and (b) every 3 months.

## Patentansprüche

1. Ein synthetisches Kulturmedium (LS) für die Isolierung und Erhaltung von *Terfezia* spp. umfassend:
- **Saccharose und/oder Glucose** als Kohlenstoffquelle in einer Konzentration im Bereich von 5 bis 15 (g/L), vorzugsweise von 7,5 bis 15 (g/L), noch bevorzugter von 10 (g/L),
die folgenden Makronährstoffe:
- KNO₃ in einer Konzentration von 0,40 und 0,55 (g/L), vorzugsweise von 0,475 (g/L),
- NH₄NO₃ in einer Konzentration von 0,35 und 0,48 (g/L), vorzugsweise von 0,413 (g/L),
- CaCl₂.2H₂O in einer Konzentration von 0,093 und 0,13 (g/L), vorzugsweise von 0,11 (g/L),
- MgSC₄.7H₂O in einer Konzentration von 0,093 und 0,106 (g/L), vorzugsweise von 0,079 (g/L),
- KH₂PO₄ in einer Konzentration von 0,036 und 0,049 (g/L), vorzugsweise von 0,043 (g/L),
**die folgenden Mikronährstoffe:**
- Eisenchelate Na₂EDTA in einer Konzentration im Bereich von 0,0079 bis 0,0107 (g/L), vorzugsweise von 0,0093 (g/L), und
FeSO₄.7H₂O im Bereich von 0,0059 bis 0,0080 (g/L), vorzugsweise von 0,0070 (g/L);
- MnSO₄.4H₂O in einer Konzentration von 0,0036 und 0,0049 (g/L), vorzugsweise von 0,0042 (g/L);
- ZnSO₄.7H₂O in einer Konzentration von 0,0018 und 0,0025 (g/L), vorzugsweise von 0,0022 (g/L);
- CuSO₄.5H₂O in einer Konzentration von 5,1×10⁻⁶ und 6,9×10⁻⁶ (g/L), vorzugsweise von 6,0×10⁻⁶ (g/L);
- CoCl₂.6H₂O in einer Konzentration von 5,1×10⁻⁶ und 6,9×10⁻⁶ (g/L), vorzugsweise von 6,0×10⁻⁶ (g/L);
- Na₂MoO₄.2H₂ O in einer Konzentration von 5,1×10⁻⁶ und 6,9×10⁻⁶ (g/L), vorzugsweise von 6,0×10⁻⁶ (g/L);
- H₃BO₃ in einer Konzentration von 0,0013 und 0,0018 (g/L), vorzugsweise von 0,0016 (g/L), und
- KI in einer Konzentration von 0,00018 und 0,00024 (g/L), vorzugsweise von 0,0016 (g/L),
**die folgenden Vitamine und Wachstumsfaktoren:**
- Thiaminhydrochlorid in einer Konzentration von 2,1×10⁻⁵ und 2,9×10⁻⁵ (g/L), vorzugsweise von 2,5×10⁻⁵ (g/L),
- Nikotinsäure in einer Konzentration von 0,00011 und 0,00014 (g/L), vorzugsweise von 0,00013 (g/L),
- Pyridoxinhydrochlorid in einer Konzentration von 0,00011 und 0,00014 (g/L), vorzugsweise von 0,00013 (g/L),
- Myo-Inositol in einer Konzentration von 0,021 und 0,029 (g/L), vorzugsweise von 0,025 (g/L), und
- Glycin in einer Konzentration von 0,00043 und 0,00058 (g/L), vorzugsweise von 0,00050 (g/L),
**und die folgenden Phytohormone:**
- ein Cytokinin vom Adenin-Typ das 6-Benzylaminopurin (BAP) in einer Konzentration im Bereich von 0,0004 bis 0,0006 (g/L), vorzugsweise von 0,0005 (g/L), und
- ein Auxin Indol-3-Essigsäure (IAA) in einer Konzentration im Bereich von 0,0004 bis 0,0006 (g/L), vorzugsweise von 0,0005 (g/L).

2. **Synthetisches Kulturmedium (LS)** für die Isolierung und Erhaltung von *Terfezia* spp. nach Anspruch 1, wobei die Kohlenstoffquelle Saccharose ist.

3. **Synthetisches Kulturmedium (LS)** für die Isolierung und Erhaltung von *Terfezia* spp. nach einem der Ansprüche 1 bis 2, das ferner ein Geliermittel, vorzugsweise Agar in einer Konzentration von 7 bis 15 (g/L), vorzugsweise von 8,5 bis 11,5 (g/L), besonders bevorzugt von 10 (g/L), enthält.

4. **Verfahren zur Isolierung von *Terfezia* spp.-Myzel**, bei dem ein Teil des zentralen Schleba-Gewebes eines Ascocarps von *Terfezia* spp. auf ein Kultivierungsgefäß gelegt wird, das LS-Kulturmedium enthält, wie in einem der Ansprüche 1 bis 3 beschrieben.

5. **Verfahren zur Erhaltung von *Terfezia* spp. Myzel-Isolaten,** das die folgenden Schritte umfasst:
a) direkte Übertragung von 4 Wochen alten Myzelscheiben, die aus Kolonien ausgewählter stabilisierter Reinkulturen *von Terfezia* spp. geschnitten wurden, auf LS-Medium, wie in einem der Ansprüche 1 bis 3 beschrieben,
b) Bebrütung der Kulturen von (a) im Dunkeln bei 25 ± 2°C für etwa 90 Tage,
c) Wiederholung der Schritte (a) und (b) alle 3 Monate.

## Revendications

1. Milieu de culture synthétique (CS) pour l'isolement et la conservation de *Terfezia* spp. comprenant :
- **du saccharose et/ou du glucose** comme source de carbone à une concentration comprise entre 5 et 15 (g/L), de préférence entre 7,5 et 15 (g/L), plus préférentiellement encore de 10 (g/L),
les macronutriments suivants :
- KNO₃ à une concentration de 0,40 à 0,55 (g/L), préférentiellement de 0,475 (g/L),
- NH₄NO₃ à une concentration de 0,35 à 0,48 (g/L), préférentiellement de 0,413 (g/L),
- CaCl₂.2H₂O à une concentration de 0,093 à 0,13 (g/L), préférentiellement de 0,11 (g/L),
- MgSO₄.7H₂O à une concentration de 0,093 à 0,106 (g/L), préférentiellement de 0,079 (g/L),
- KH₂PO₄ à une concentration de 0,036 à 0,049 (g/L), préférentiellement de 0,043 (g/L),
**les micronutriments suivants :**
- chélates de fer Na₂EDTA à une concentration comprise entre 0,0079 et 0,0107 (g/L), préférentiellement de 0,0093 (g/L), et
FeSO₄.7H₂O compris entre 0,0059 et 0,0080 (g/L), préférentiellement de 0,0070 (g/L) ;
- MnSO₄.4H₂O à une concentration de 0,0036 à 0,0049 (g/L), préférentiellement de 0,0042 (g/L) ;
- ZnSO₄.7H₂O à une concentration de 0,0018 à 0,0025 (g/L), préférentiellement de 0,0022 (g/L) ;
- CuSO₄.5H₂O à une concentration de 5,1×10⁻⁶ à 6,9×10⁻⁶ (g/L), préférentiellement de 6,0×10⁻⁶ (g/L) ;
- CoCl₂.6H₂O à une concentration de 5,1×10⁻⁶ à 6,9×10⁻⁶ (g/L), préférentiellement de 6,0×10⁻⁶ (g/L) ;
- Na₂MoO₄.2H₂O à une concentration de 5,1×10⁻⁶ à 6,9×10⁻⁶ (g/L), préférentiellement de 6,0×10⁻⁶ (g/L) ;
- H₃BO₃ à une concentration de 0,0013 à 0,0018 (g/L), préférentiellement de 0,0016 (g/L), et
- KI à une concentration de 0,00018 à 0,00024 (g/L), préférentiellement de 0,0016 (g/L),
**les vitamines et facteurs de croissance suivants :**
- chlorhydrate de thiamine à une concentration de 2,1×10⁻⁵ à 2,9×10⁻⁵ (g/L), préférentiellement de 2,5×10⁻⁵ (g/L),
- acide nicotinique à une concentration de 0,00011 à 0,00014 (g/L), préférentiellement de 0,00013 (g/L),
- chlorhydrate de pyridoxine à une concentration de 0,00011 à 0,00014 (g/L), préférentiellement de 0,00013 (g/L),
- myo-Inositol à une concentration de 0,021 à 0,029 (g/L), préférentiellement de 0,025 (g/L), et
- glycine à une concentration de 0,00043 à 0,00058 (g/L), préférentiellement de 0,00050 (g/L),
**et les phytohormones suivantes :**
- une cytokinine de type adénine, la 6-benzylaminopurine (BAP), à une concentration comprise entre 0,0004 et 0,0006 (g/L), préférentiellement de 0,0005 (g/L), et
- une auxine, l'acide indole-3-acétique (IAA), à une concentration comprise entre 0,0004 et 0,0006 (g/L), préférentiellement de 0,0005 (g/L).

2. **Milieu de culture synthétique (CS)** pour l'isolement et la conservation de *Terfezia* spp. selon la revendication 1, dans lequel la source de carbone est le saccharose.

3. **Milieu de culture synthétique (CS)** pour l'isolement et la conservation de *Terfezia* spp. selon l'une quelconque des revendications 1 à 2, comprenant en outre un gélifiant, préférentiellement de l'agar à une concentration de 7 à 15 (g/L), préférentiellement de 8,5 à 11,5 (g/L), plus préférentiellement de 10 (g/L).

4. **Procédé d'isolement du mycélium de *Terfezia* spp.** comprenant le placement d'une partie du tissu gléba central d'un ascocarpe de *Terfezia* spp. sur un récipient de culture contenant un milieu de culture CS, tel que décrit dans l'une quelconque des revendications 1 à 3.

5. **Procédé de conservation d'isolats de mycélium de *Terfezia* spp.** comprenant les étapes suivantes :
a) transfert direct de disques mycéliens âgés de 4 semaines, coupés à partir de colonies de cultures pures stabilisées de *Terfezia* spp. sélectionnées, sur un milieu CS, tel que décrit dans l'une quelconque des revendications 1 à 3,
b) incubation des cultures de l'étape a) dans l'obscurité à 25 ± 2°C pendant environ 90 jours,
c) répétition des étapes a) et b) tous les 3 mois.
